# EUROPEAN PATENT APPLICATION

(11) **EP 2 224 625 A1**
(43) Date of publication of application: **01.09.2010**
(21) Application number: 09178024.7
(22) Date of filing: 04.12.2009
(51) Int. Cl.: H04B 10/17, G02B 27/10, G02F 1/35, G02F 1/39

(54) **Optical signal processing device and method of processing optical signal**

(30) Priority: 27.02.2009 JP 2009046934
(71) Applicant: FUJITSU LIMITED, Kawasaki-shi, Kanagawa 211-8588 (JP)
(72) Inventor: Futami, Fumio, Kanagawa 211-8588 (JP)
(74) Representative: HOFFMANN EITLE

(57) **Abstract**

An optical signal processing device for shaping a waveform of an optical signal, including: an intensity inversion wavelength converter (102) configured to generate an intensity-modulated optical signal of a second wavelength obtained by inverting a signal intensity of an input intensity-modulated optical signal of a first wavelength; an optical coupler (103) configured to multiplex the intensity-modulated optical signal of the first wavelength and the intensity-modulated optical signal of the second wavelength at a timing at which signal intensities of those signals become opposite; and an optical limiter (104) configured to input coupled light output from the optical coupler (103), and suppress gain as power of the coupled light becomes higher.

## Description

### FIELD

The embodiments discussed herein are related to a technique of shaping optical signal waveforms used for optical communications etc. without converting them into electric signals.

### BACKGROUND

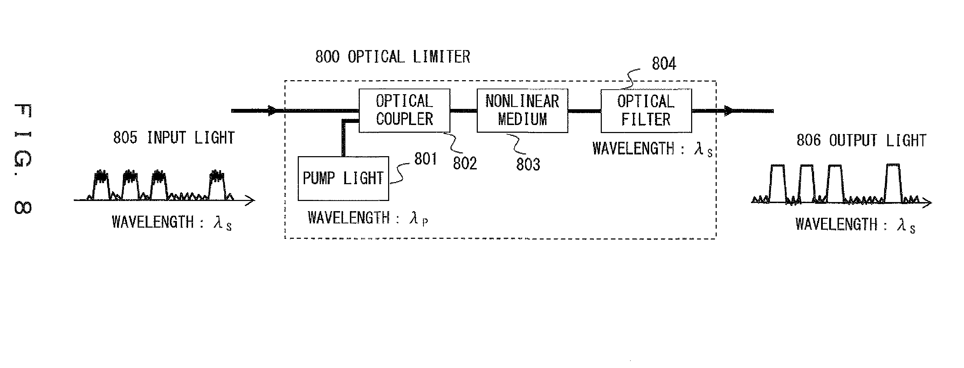

Among conventional techniques of shaping waveforms of optical signals without converting the optical signals into electric signals, there is a waveform shaping method that uses an optical limiter. Fig. 8 illustrates a conventional technique for a waveform shaping device that uses an optical limiter. An optical limiter 800 includes, as its main constituents, pump light 801 of a wavelength different from that of input light 805, an optical coupler 802, a nonlinear medium 803, and an optical filter 804. In the optical coupler 802, a nonlinear phenomenon occurs in which the power of the pump light 801 shifts to the input light 805 via a third-order nonlinear effect occurring in a nonlinear medium 803, to which the input light 805 that is to be waveform shaped and the pump light 801 are input. Because the pump light 801 is output from the nonlinear medium 803 together with the input light 805, the pump light 801 is removed by the optical filter 804 so that only optical signal components can be extracted as output light 806.

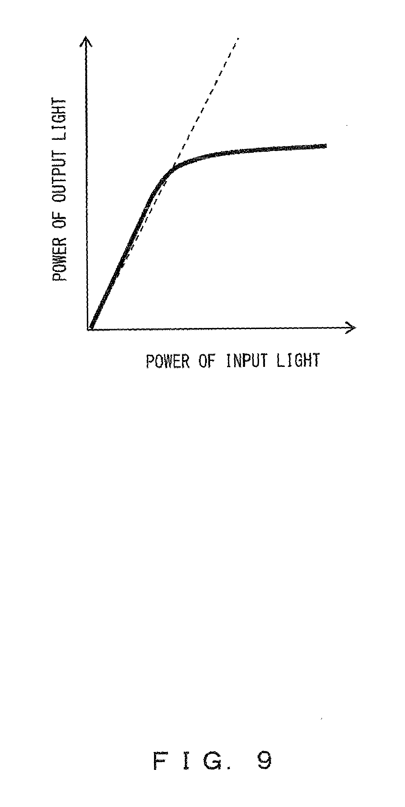

Fig. 9 illustrates input/output characteristics of an optical limiter. This graph illustrates a typical relationship between the power of the input light 805 input to the nonlinear medium 803 and the power of the output light 806 output from the nonlinear medium 803 when the pump light 801 to be input to the nonlinear medium 803 has certain optical power in Fig. 8. In a region where the input light 805 has low power, the input light 805 and the output light are in a linear relationship. However, when the input light 805 has high power, that is, when its power is not sufficiently lower than that of the pump light 801, the output power is saturated because the energy converted from the pump light 801 into the input light 805 runs out. Use of these saturation characteristics makes it possible to suppress noise components on the level of "1" of the input optical signal so as to shape the waveform.

As conventional techniques relating to the technique disclosed by the present application, prior art documents as given below have been disclosed.

In view of designing systems, it is a serious problem that the wavelength of an optical signal changes before and after the waveform shaping of the optical signal in a communications system, and this deteriorates the degree of freedom in system design. Accordingly, as in the above conventional technique, the wavelength of an optical signal after being subjected to waveform shaping is strongly desired to be the same as that of the optical signal before it is subjected to the waveform shaping. Although optical limiters, which utilize nonlinear effects in optical fibers, are characteristic in their ultrahigh-speed response and ultrawide band, they are not able to suppress noise at low signal intensity levels (troughs), leaving such noise in signals, which is problematic.

Patent Document 1: Japanese Laid-open Patent Publication No. 2008-233544

Non Patent Document 1: K. Kitayama, Y. Kimura, K. Okamoto, and S. Seikai, "Optical sampling using an all-fiber optical Kerr shutter," Appl. Phys. Lett. 46, pp.623-625 (1985).

### SUMMARY

It is an object in one aspect of the invention to make it possible to suppress noise in all bands of an optical signal so as to perform waveform shaping of the optical signal. [0007] According to an aspect of the invention, an optical signal processing device is provided for shaping a waveform of an optical signal, including: an intensity inversion wavelength converter configured to generate an intensity-modulated optical signal of a second wavelength obtained by inverting a signal intensity of an input intensity-modulated optical signal of a first wavelength; an optical coupler configured to multiplex the intensity-modulated optical signal of the first wavelength and the intensity-modulated optical signal of the second wavelength at a timing at which signal intensities of those signals become opposite; and an optical limiter configured to input coupled light output from the optical coupler, and suppressing gain as power of the coupled light becomes higher.

According to an aspect of the invention, an optical signal processing device is provided for shaping a waveform of an optical signal, including: an optical splitter configured to branch an input intensity-modulated optical signal of a first wavelength into first and second paths; an intensity inversion wavelength converter that is provided on the first path and that is configured to generate an intensity-modulated optical signal of a second wavelength obtained by inverting a signal intensity of the intensity-modulated optical signal of the first wavelength; a delay element that is provided on at least one of the first and second paths and that is configured to adjust a path length; an amplitude adjuster that is provided on at least one of the first and second paths and that is configured to adjust amplitude; a polarization controller that is provided on at least one of the first and second paths and that is configured to adjust a polarized wave; a first optical power monitor unit that is provided on at least one of the first and second paths, and that is configured to monitor power of the intensity-modulated optical signal of the first wavelength or the intensity-modulated optical signal of the second wavelength in order to control the polarization controller on the basis of a result of the monitoring; an optical coupler configured to couple the intensity-modulated optical signal of the first wavelength that has been propagated through the first path and the intensity-modulated optical signal of the second wavelength that has been propagated through the second path; a polarizer that is connected on an output side of the optical coupler and that transmits only a single polarized wave; an optical power adjustment mechanism configured to adjust power of coupled light output from the polarizer: a second optical power monitor unit that monitors power of coupled light output from the polarizer, controls the amplitude adjuster and the optical power adjustment mechanism on the basis of a result of the monitoring, and thereby adjusts intensities of the intensity-modulated optical signal of the first wavelength and the intensity-modulated optical signal of the second wavelength that are included in the coupled light; and an optical limiter configured to input coupled light output from the optical power adjustment mechanism, suppress an amplitude noise component included in the coupled light by suppressing gain as power of the coupled light increases, filtering only light of the first wavelength from light obtained by the filtering, and output resultant light.

### BRIEF DESCRIPTION OF THE DRAWINGS

Fig. 1 illustrates a configuration of an optical signal processing device according to the first embodiment;

Fig. 2A illustrates operations in the first embodiment;

Fig. 2B illustrates operations in the first embodiment;

Fig. 2C illustrates operations in the first embodiment;

Fig. 3 illustrates a configuration of an optical signal processing device according to the second embodiment;

Fig. 4 illustrates an exemplary configuration of an intensity inversion wavelength converter 102 using an optical Kerr switch;

Fig. 5 illustrates a configuration according to the third embodiment;

Fig. 6 illustrates a configuration according to the fourth embodiment;

Fig. 7A illustrates a configuration according to the fifth embodiment;

Fig. 7B illustrates a configuration according to the fifth embodiment;

Fig. 8 illustrates a waveform shaping device of a conventional technique that uses an optical limiter; and

Fig. 9 illustrates input/output characteristics of an optical limiter.

### DESCRIPTION OF EMBODIMENTS

Hereinafter, embodiments of the present invention will be explained in detail.

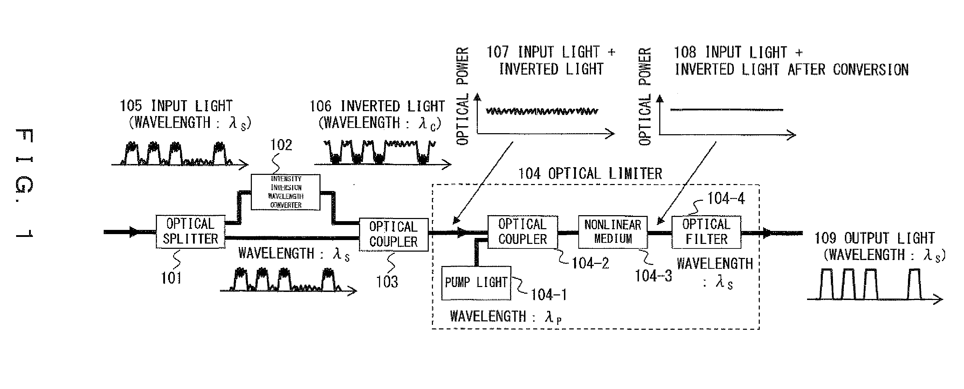

Fig. 1 illustrates a configuration of an optical signal processing device according to the first embodiment.

Input light 105 (wavelength: λs) that is an optical signal to be subjected to waveform shaping based on noise compression is branched into two paths. In the first path, an intensity inversion wavelength converter 102 inverts the signal intensity of the input light 105 and also converts the wavelength. The wavelength after the wavelength conversion is assumed to be λc. Inverted light 106 output from the intensity inversion wavelength converter 102 and the input light 105 are coupled with each other by an optical coupler 103. The coupling is performed at the same relative timing as the timing of branching the input light 105 into the two paths.

An optical limiter 104 mainly contains pump light 104-1 of a wavelength λp that is different from either the wavelength of the input light 105 or the inverted light 106, an optical coupler 104-2, a nonlinear medium 104-3, and an optical filter 104-4. The configuration and operations of this portion are the same as those of the conventional technique explained in Fig. 8 . Specifically, in the optical coupler 104-2, a nonlinear phenomenon occurs in which the power of the pump light 104-1 shifts to "input light + inverted light" 107 via a third-order nonlinear effect occurring in the nonlinear medium 104-3, to which the input light + inverted light 107 output from the optical coupler 103 and the pump light 104-1 are input. Because the pump light 104-1 is output from the nonlinear medium 104-3 together with the input light + inverted light 107, the pump light 104-1 of the wavelength λp and the inverted light 106 of the wavelength λc are removed by the optical filter 104-4 so that only optical signal components are extracted as output light 109.

In this situation, the input/output characteristics of the optical limiter are the same as those of the conventional technique illustrated in Fig. 9.

In addition to the above configuration, the optical limiter 104 can be realized by using techniques of gain saturation of Quantum-dot amplifiers, gain saturation of semiconductor amplifiers, optical amplification using a distributed feedback (DFB) laser, and the like.

The input light 105 and the inverted light 106 are roughly opposite in logical polarity. Accordingly, the optical power of the input light + inverted light 107 that is output as a result of coupling of the input light 105 and the inverted light 106 in the optical coupler 103 is almost a constant value, which does not depend upon data pattern.

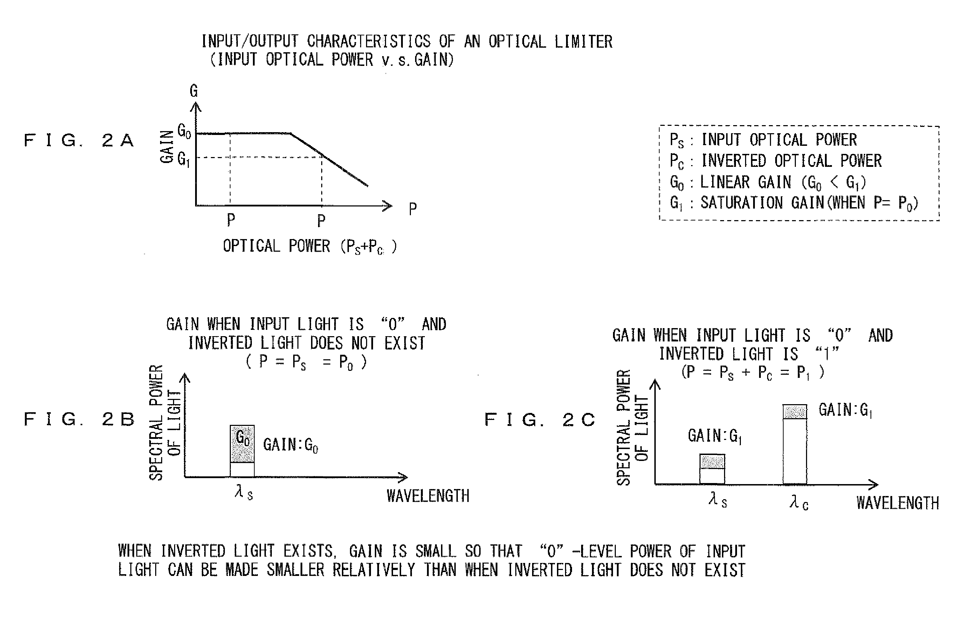

A case where the input light + inverted light 107 has been input to the optical limiter 104 is considered. As illustrated in Fig. 9, the relationship between the input light power and the output light power in the optical limiter 104 is such that output light power is proportional to input light power in regions with low input optical power so that the gain is a fixed value. By contrast, regions with high input optical power do not result in sufficient output optical power with respect to the input optical power, so that the gain is reduced. In other words, as illustrated in Fig. 2A, the gain of the optical limiter 104 is a constant value for a low input optical power P₀, while it decreases in proportion to an optical power P₁ when P₁ is high.

It is now assumed that only the input light 105 is input to the optical limiter 104 and the inverted light 106 is not input, similarly to the above described conventional technique. In such a case, according to the input/output characteristics in Fig. 9, the power variation of the output light 109 with respect to the power variation of the input light 105 is clipped to a roughly constant value during a time period when the logic value of the input light 105 is "1". Thereby, noise components superimposed on the input light 105 during the time period when the logic value of the input light 105 is "1" are suppressed. During a time period when the logic value of the input light 105 is "0", the power of the output light 109 varies in proportion to the power variation of the input light 105. That is, this state corresponds to a state in which the low input light power P₀ in, for example, Fig. 2A is input, and the output light 109 has constant gain G₀ with respect to the input light 105. As a result of this, as illustrated in Fig. 2B, the noise components superimposed in an optical signal are amplified by the gain G₀ together with that optical signal so that the noise component cannot be suppressed in the output light 109.

Next, a case is assumed where not only the input light 105 but also the inverted light 106 has been input to the optical limiter 104, i.e., where the input light + inverted light 107 is input from the optical coupler 103. In such a case, the input light 105 and the inverted light 106 are roughly opposite in logical polarity, and accordingly, the optical power of the input light + inverted light 107 is nearly constant around the optical power P₁ in Fig. 2A during both of the time periods when the logical value of the input light 105 is "1" and when this value is "0".

In such a case, the optical power of the input light + inverted light 107 is a constant value P₁ during the time period where the logical value of the input light 105 is "1", and accordingly the gain of the optical limiter 104 is gain G₁ that is lower than the constant gain G₀ according to the characteristics illustrated in Fig. 2A. Accordingly, similarly to the conventional technique, the amplification rate of noise components superimposed on the input light 105 is suppressed by the gain G₁, and output 108 of the nonlinear medium 104-3 continues to be a constant value. In such a case, the optical power of the inverted light 106 is a value that almost corresponds to the logical value "0", and accordingly the value of the output light 109 that can be obtained by removing optical components in the pump light 104-1 and the inverted light 106 in the optical filter 104-4 is a constant value that almost corresponds to the logical value "1" of the input light 105.

Next, the optical power of the input light + inverted light 107 is also P₁ during the time period where the logical value of the input light 105 is "0". Accordingly, during this time period as well, the gain of the optical limiter 104 is the gain G₁, which is lower than the constant gain G₀ according to the characteristics illustrated in Fig. 2A. Specifically, as illustrated in Fig. 2C, gain with respect to optical components in the inverted light 106 included in the input light + inverted light 107 and gain with respect to optical components in the input light 105 are both the low gain G₁. Accordingly, output 108 of the nonlinear medium 104-3 continues to be a fixed value while the amplification rate of noise components superimposed on the input light 105 is being suppressed by the gain G₁. In such a case, the optical power of the input light 105 is a value almost corresponding to the logical value "0" and the optical power of the inverted light 106 is a value that almost corresponds to the logical value "1". Accordingly, the output light 109 obtained by removing optical components in the pump light 104-1 and the inverted light 106 in the optical filter 104-4 is a signal having a constant value that almost corresponds to a logical value "0" of the input light 105 with the noise components being suppressed.

The wavelength λc of the inverted light 106 is set to be different from the wavelength λs of the input light 105 in order to make it easy for an optical filter 302 to extract only the input light 105.

As described above, in the first embodiment, the intensity inversion wavelength converter 102 is provided for determining the logical polarity of the input light 105, and the inverted light 106 obtained from the intensity inversion wavelength converter 102 and the input light 105 are coupled by the optical coupler 103 so as to be input to the optical limiter 104. This makes it possible to apply the nonlinear saturation characteristics of the optical limiter 104 to the entirety of the input light 105 and to suppress noise components in all bands in the input light 105.

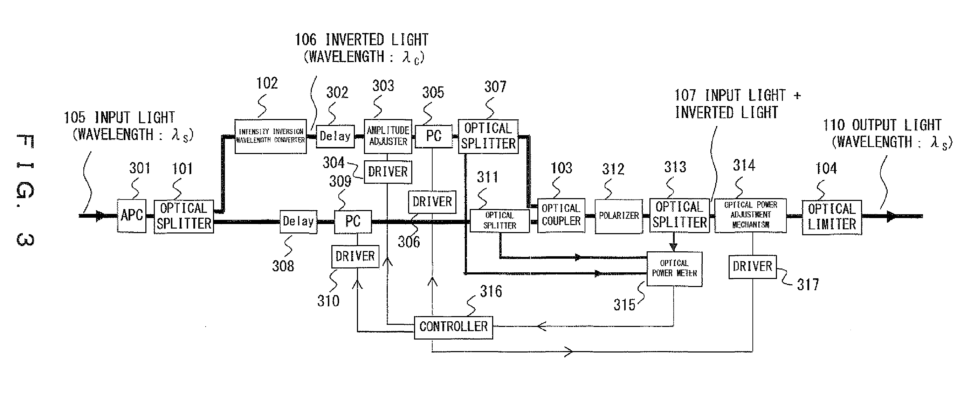

Fig. 3 illustrates a configuration of the optical signal processing device according to the second embodiment.

In the configuration illustrated in Fig. 3, portions performing the same processes as in the first embodiment in Fig. 1 are denoted by the same numerical symbols as in Fig. 1. An optical splitter 101, the intensity inversion wavelength converter 102, the optical coupler 103, and the optical limiter 104 in Fig. 3 are the same in fundamental operations as those in the first embodiment in Fig. 1; however, the configuration in Fig. 3 is different from the case in Fig. 1 in that it has specific portions for controlling amplitude, power and a polarization state.

The input light is input to an automatic polarization stabilizer (APC) 301 for stabilizing an arbitrary polarization state into a state that is polarized according to prescribed characteristics. The automatic polarization stabilizer 301 is realized by a polarization controller (PC) of an optical fiber type, which changes input light into a desired polarization state by monitoring the polarization state, such as Stokes parameters or the like. This configuration has small insertion loss. As the automatic polarization stabilizer 301, a device can be used which is based on a method in which polarized light is controlled using a LiNbO₃ modulator, instead of a PC of an optical fiber type. Operations can be performed at high speed in this configuration.

Output of the automatic polarization stabilizer 301 is branched into two paths by the optical splitter 101. The optical splitter 101 is capable of splitting input light at a desired rate by using a so-called optical coupler. In Fig. 3, a path that goes through the units denoted by 102 and 302 through 307 is referred to as the first path, and a path that goes through the units denoted by 308 through 311 is referred to as the second path.

Delay elements (Delays) 302 and 308 are provided to the first and second paths, respectively, so as to make the two paths identical to each other in length so that the light beams that have traveled through the two different paths are coupled at the same relative timing as the timing at which they are branched by the optical splitter 101. The delay elements 302 and 308 can be optical fibers of arbitrary length, or can be of a type using spatial optics. If the two paths can be adjusted in length, it is not necessary to provide delay elements to both paths, and a delay element in one of the paths is enough.

Also, in order to make the two light beams roughly identical to each other in amplitude when being coupled by the optical coupler 103, the following configuration is employed. The power levels of the light beams that have travelled through the paths are monitored by an optical power meter 315 via optical splitters 307 and 311. The optical power meter 315 is realized, for example, by a polarimeter. A controller 316 controls, on the basis of a result of the monitoring by the optical power meter 315, an amplitude adjuster 303 provided on the first path through a driver 304 so that the power output from the optical splitter 307 and the power output from the optical splitter 311 are almost identical to each other in amplitude. The amplitude adjuster 303 can be realized by an optical amplifier (erbium-doped optical fiber amplifier, semiconductor optical amplifier, or the like) when it is used for amplifying light, and can be realized by an optical attenuator when it is used for attenuating light. The amplitude adjuster 303 may be provided to the second path instead of the first path, or may be provided on both of them.

The polarization controllers (PCs) 305 and 309 provided to the first and second paths respectively operate so that polarizations of two optical signals of different wavelengths that are input to the optical limiter 104 are identical to each other. The controller 316 performs a feedback control on the polarization controllers 305 and 309 via the drivers 306 and 310 on the basis of a result of monitoring, by the optical power meter 315, of output light of an optical splitter 313 so that the optical power output from a polarizer 312 provided in a stage later than the optical coupler 103 becomes maximum. More specifically, the polarization controller 305 is first controlled, and next, the polarization controller 309 is controlled so that the optical power output from the optical splitter 313 becomes maximum. The polarization controllers 305 and 309 are realized, for example, as elements that apply stresses to optical fibers so as to convert light into a desired polarization state.

An optical power adjustment mechanism 314 adjusts the optical power of the input light + inverted light 107 so that the optical power of the input light + inverted light 107 matches the gain saturation characteristics (See Fig. 2A). In order to realize this, the optical power meter 315 monitors output of the optical splitter 313 so as to control output of the optical power adjustment mechanism 314 through a driver 317. Usually, power input to the optical limiter 104 is a very high value, and accordingly the optical power adjustment mechanism 314 is realized as an optical amplifier.

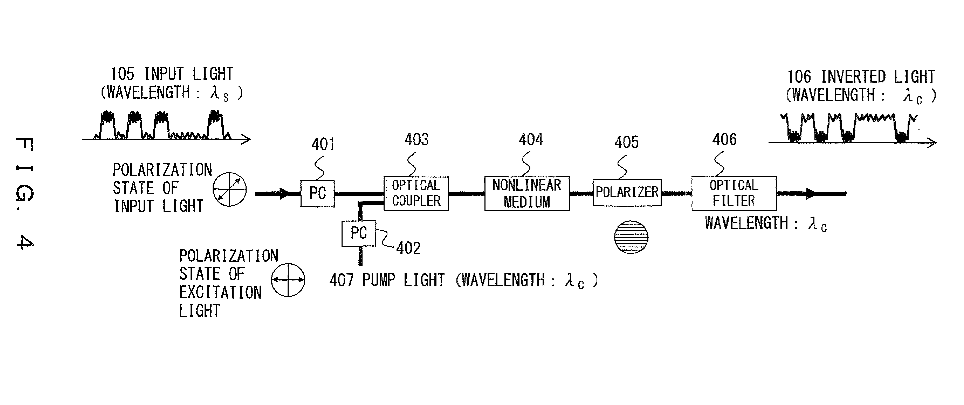

Fig. 4 illustrates an exemplary configuration of the intensity inversion wavelength converter 102 according to the first embodiment illustrated in Fig. 1 or the second embodiment illustrated in Fig. 2, and is realized by using an optical Kerr switch. In Fig. 4, the input light 105 and the inverted light 106 are the same as those in Fig. 1 or Fig. 3.

As illustrated in Fig. 4, the intensity inversion wavelength converter 102 using an optical Kerr switch is realized by a polarization controller (PC) 401, an optical coupler 403, a nonlinear medium 404, a polarizer 405, and an optical filter 406.

When the input light 105 does not exist, pump light 407 is set to be in a polarization state in which the pump light 407 of a wavelength λc, which is different from a wavelength λs of the input light 105, is transmitted through the polarizer 405.

The input light 105 is input to the nonlinear medium 404 through the optical coupler 403 in a linearly polarized state in which the input light 105 is at approximately 45 degrees with respect to the pump light 407. Also, when the optical power of the input light 105 and the specifications of the nonlinear medium 404 are set appropriately, the polarized light of the pump light 407 is rotated by 90 degrees by cross-phase modulation in the nonlinear medium 404 so that the polarized light is not transmitted through the polarizer 405 when the input light 105 exists.

As described above, when the input light 105 does not exist, the pump light 407 is output, and when the input light 105 exists, the pump light 407 is not output, and accordingly the intensity of the input light 105 is inverted. At the same time, the data of the input light 105 is converted into the pump light 407, and accordingly the wavelength as well is converted from λs to λc.

The optical filter 406 is set to transmit only a wavelength λc.

As described above, the inverted light 106 having its logical polarity inverted and its wavelength converted into λc with respect to the input light 105 having a wavelength λs is output.

The detailed operations of the optical Kerr switch are disclosed, for example, in above mentioned non Patent Document 1.

In addition to the above configuration in Fig. 4, the intensity inversion wavelength converter 102 in Fig. 3 (or Fig. 1) can be realized using a technique of inverting intensities into different wavelengths based on gain saturation of semiconductor optical amplifiers (SOAs) . Also, the intensity inversion wavelength converter 102 can be realized using a technique of intensity inversion wavelength conversion based on Cross-Phase Modulation (XPM) in Nonlinear Optical Loop Mirror (NOLM) interferometers. Alternately, the intensity inversion wavelength converter 102 can be realized using a technique of intensity-inverted wavelength conversion utilizing phase differences caused by cross-phase modulation in a Mach-Zehnder interferometer in which a nonlinear medium such as a semiconductor optical amplifier is provided to one path.

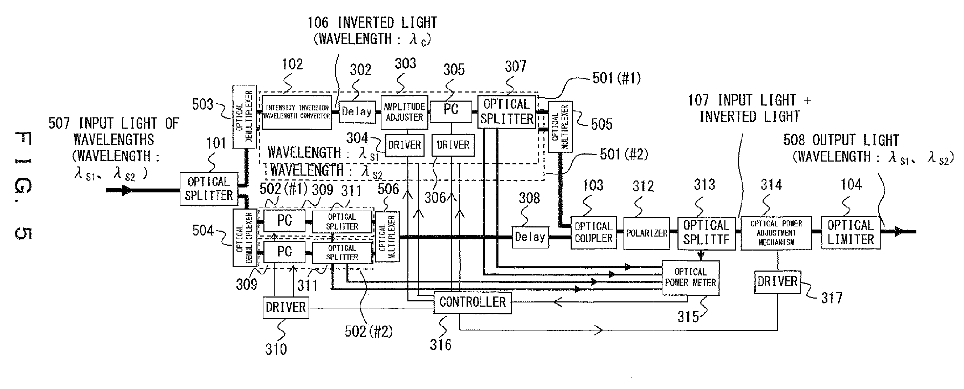

Fig. 5 illustrates a configuration of an optical signal processing device according to the third embodiment.

In the configuration in Fig. 5, portions performing the same processes as in the first embodiment in Fig. 1 or the second embodiment in Fig. 3 are denoted by the same numerical symbols as those in Fig. 1 or 3.

The first and second embodiments illustrated in Figs. 1 and 3 are for performing optical signal processes on an input light of one wavelength. In the third embodiment illustrated in Fig. 5, fundamental operations of respective portions are the same as those in the second embodiment in Fig. 2. However, the configuration illustrated in Fig. 5 can perform an optical signal process in which the light limiter 104 alone suppresses noise in input light 507 that is made of two optical signal components of two wavelengths so that waveform shaping can be realized.

In order to realize this, the input light 507 that has been branched to the first path by the optical splitter 101 is demultiplexed by an optical demultiplexer 503 into one of a plurality of first path processing units 501 (#1 and #2) for each wavelength. Then, the processing units 501 (#1 and #2) execute the above described process for the first path for each wavelength. Thereafter, outputs of the respective processing units are multiplexed by an optical multiplexer 505, and the multiplexed output is input to the optical coupler 103.

Similarly, the input light 507 that has been branched to the second path by the optical splitter 101 is demultiplexer by an optical demultiplexer 504 into one of a plurality of second path processing units 502 (#1 and #2) for each wavelength. Then, the processing units 502 (#1 and #2) execute the above described process for the second path for each wavelength. Thereafter, outputs of the respective processing units are multiplexed by an optical multiplexer 506, and the multiplexed output is input to the optical coupler 103.

In the first path processing units 501 (#1 and #2) and the second path processing units 502 (#1 and #2) that are prepared for respective wavelengths, amplitude adjustment and polarization control that are the same as those in the second embodiment are performed independently for each wavelength.

The optical demultiplexers 503 and 504 and the optical multiplexers 505 and 506 can be realized, for example, by array waveguide gratings (AWGs), fiber bragg gratings (FBGs) or the like.

The above described third embodiment is an example of an optical signal processing device that realizes waveform shaping by using one optical limiter so as to suppress noise in input light including optical signal components made of two wavelengths. However, this embodiment can similarly realize an optical signal processing device for input light including optical signal components made of plural wavelengths. In such a case, optical signals that have been subjected to intensity inversion are newly generated for each different wavelength, and they are input to an optical limiter together with the input light. Accordingly, in the nonlinear media in the optical limiter, intervals between adjacent optical signals become shorter, and accordingly crosstalk can be expected to occur.

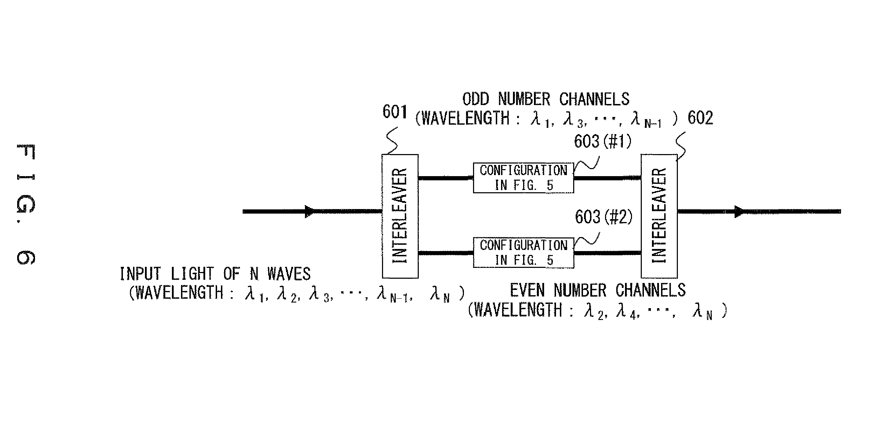

Fig. 6 illustrates a configuration of the fourth embodiment that realizes avoidance of the above mentioned crosstalk. In Fig. 6, input light made of N waves is divided into wavelength components of odd number channels and wavelength components of even number channels so that the wave intervals are expanded, and the configuration of the third embodiment illustrated in Fig. 5 is applied to each group obtained by the division and the groups are subject to parallel processing. Thereafter, results of processing the respective groups are multiplexed by the interleaver 602 so as to be output.

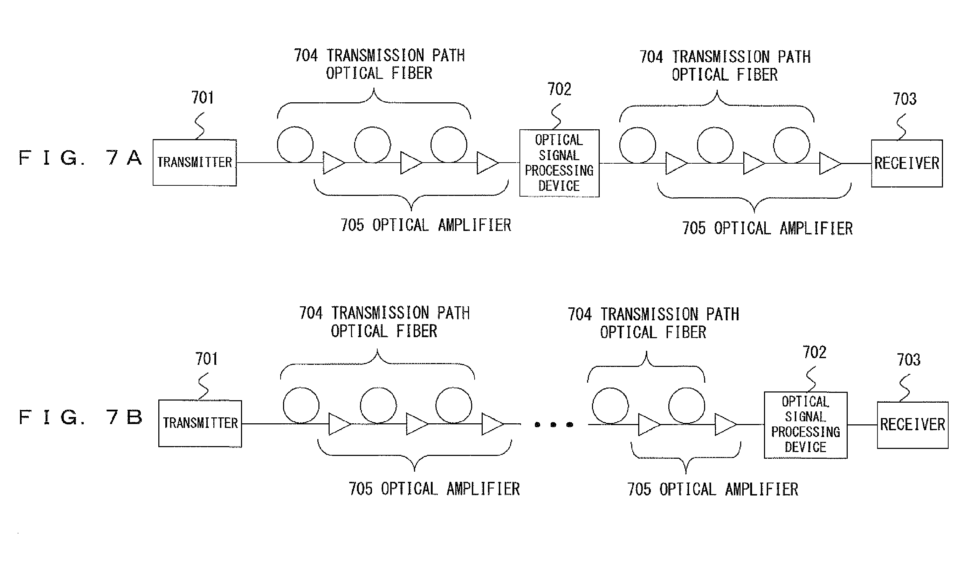

Figs. 7A and 7B illustrate exemplary configurations of the fifth embodiment. The fifth embodiment relates to an optical fiber communications system to which the optical signal processing devices realized by the above first through fourth embodiments are applied.

An optical signal that has been transmitted from a transmitter 701 to a receiver 703 is propagated in an optical fiber transmission path that includes a transmission path optical fiber 704 and an optical amplifier 705 for amplifying optical power that is attenuated while being transmitted through the optical fiber. In this transmission, the waveforms of optical signals deteriorate due to a nonlinear effect caused in the transmission path optical fiber 704, noise made by the optical amplifier 705, and the mutual effects of the two. In the exemplary configuration illustrated in Fig. 7A, an optical signal processing device 702 provided on an optical fiber transmission path shapes the signal waveforms in order to remedy the deterioration. The configuration of one of the above described embodiments can be applied to the optical signal processing device 702 . If an optical signal has one wavelength, the configuration of Fig. 1 or Fig. 3 can be applied, and when an optical signal has plural wavelengths, the configuration of Fig. 5 or Fig. 6 can be applied.

Also, as illustrated in Fig. 7B, the optical signal processing device 702 may be provided immediately before the receiver 703.

The configurations illustrated in Fig. 7A or Fig. 7B enable transmission of optical signals over a longer distance in an optical fiber communications system.

In the explanations of the above embodiments, RZ waveforms of intensity modulation are used for waveform diagrams of optical signals. However, the technique disclosed herein is not limited to optical signals based on an intensity modulation method, but can be applied to optical signals based on a phase modulation method, and to signals having RZ waveforms.

The technique disclosed herein can be applied to an optical signal processing device that performs waveform shaping in an optical fiber communications system.

The technique disclosed herein makes it possible to suppress noise not only in portions corresponding to crests of intensity-modulated signals but also in portions corresponding to troughs in intensity-modulated signals.

The technique disclosed herein makes it possible to simultaneously shape the waveforms of an optical signal having plural wavelengths, and to accurately hold the respective wavelengths of the optical signal before and after the waveform shaping.

The technique disclosed herein improves performance of a long-distance optical communications system.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. An optical signal processing device for shaping a waveform of an optical signal, comprising:
an intensity inversion wavelength converter (102) configured to generate an intensity-modulated optical signal of a second wavelength obtained by inverting a signal intensity of an input intensity-modulated optical signal of a first wavelength;
an optical coupler (103) configured to multiplex the intensity-modulated opticai signal of the first wavelength and the intensity-modulated optical signal of the second wavelength at a timing at which signal intensities of those signals become opposite; and
an optical limiter (104) configured to input coupled light output from the optical coupler (103), and suppress gain as power of the coupled light becomes higher.

2. An optical signal processing device for shaping a waveform of an optical signal, comprising:
an optical splitter (101) configured to branch an input intensity-modulated optical signal of a first wavelength into first and second paths;
an intensity inversion wavelength converter (102) that is provided on the first path and that is configured to generate an intensity-modulated optical signal of a second wavelength obtained by inverting a signal intensity of the intensity-modulated optical signal of the first wavelength;
a delay element (302, 308) that is provided on at least one of the first and second paths and that is configured to adjust a path length;
an amplitude adjuster (303) that is provided on at least one of the first and second paths and that is configured to adjust amplitude;
a polarization controller (305, 309) that is provided on at least one of the first and second paths and that is configured to adjust a polarized wave;
a first optical power monitor unit (316) that is provided on at least one of the first and second paths, and that is configured to monitor power of the intensity-modulated optical signal of the first wavelength or the intensity-modulated optical signal of the second wavelength in order to control the polarization controller (305, 309) on the basis of a result of the monitoring;
an optical coupler (103) configured to couple the intensity-modulated optical signal of the first wavelength that has been propagated through the first path and the intensity-modulated optical signal of the second wavelength that has been propagated through the second path;
a polarizer (312) that is connected on an output side of the optical coupler and that transmits only a single polarized wave;
an optical power adjustment mechanism (314) configured to adjust power of coupled light output from the polarizer;
a second optical power monitor unit (316) that monitors power of coupled light output from the polarizer (312), controls the amplitude adjuster (303) and the optical power adjustment mechanism (314) on the basis of a result of the monitoring, and thereby adjusts intensities of the intensity-modulated optical signal of the first wavelength and the intensity-modulated optical signal of the second wavelength that are included in the coupled light; and
an optical limiter (104) configured to input coupled light output from the optical power adjustment mechanism (314), suppress an amplitude noise component included in the coupled light by suppressing gain as power of the coupled light increases, filter only light of the first wavelength from light obtained by the filtering, and output resultant light.

3. The optical signal processing device according to claim 1, wherein:
the optical limiter (104) includes a nonlinear medium, and performs parametric amplification in the nonlinear medium.

4. The optical signal processing device according to claim 3, wherein:
the nonlinear medium is an optical fiber.

5. The optical signal processing device according to claim 1, wherein:
the intensity inversion wavelength converter (102) generates the intensity-modulated optical signal of the second wavelength by using an optical circuit that converts a wavelength at the same time that the optical circuit revolves a polarization plane by cross-phase modulation in a nonlinear medium.

6. The optical signal processing device according to claim 5, wherein:
the optical circuit is an optical Kerr switch using an optical fiber as the nonlinear medium.

7. A method of processing an optical signal for shaping a waveform of an optical signal, comprising:
generating an intensity-modulated optical signal of a second wavelength obtained by inverting a signal intensity of an input intensity-modulated optical signal of a first wavelength;
multiplexing the intensity-modulated optical signal of the first wavelength and the intensity-modulated optical signal of the second wavelength at a timing at which signal intensities of those signals become opposite; and
inputting coupled light output from the optical coupler, and suppressing gain as power of the coupled light becomes higher.
